# EUROPÄISCHE PATENTSCHRIFT

(11) **EP 0 570 989 B1**
(45) Veröffentlichungstag und Bekanntmachung des Hinweises auf die Patenterteilung: **27.05.1998**
(21) Anmeldenummer: 93110552.2
(22) Anmeldetag: 06.09.1990
(51) Int. Cl.: A62C 2/06, E04B 1/94, C09K 21/00

(54) **Quellmittelzusammensetzung**
Composition of intumescent material
Composition intumescente

(30) Priorität: 14.09.1989 DE 3930722
(43) Veröffentlichungstag der Anmeldung: 24.11.1993
(62) Teilanmeldung aus: 90913333.2
(73) Patentinhaber: Grünau Illertissen GmbH, 89257 Illertissen (DE)
(72) Erfinder: Graf, Robert, D-7919 Altenstadt (DE); Kaiser, Maria-Elisabeth, D-7900 Ulm (DE); Annemaier, Dieter, Dr., D-7901 Illerkirchberg 2 (DE); Keipl, Stefan, D-7919 Bellenberg (DE)
(74) Vertreter: Wilk, Hans-Christof, Dr.

(56) Entgegenhaltungen:
- EP-A- 0 149 559
- EP-A- 0 217 569
- EP-A- 0 258 685
- DE-A- 2 737 978
- DE-A- 2 947 652
- DE-A- 3 438 253
- DE-A- 3 534 706
- FR-A- 2 363 673
- GB-A- 2 111 624

## Beschreibung

Die Erfindung betrifft eine Quellmittelzusammensetzung, die für ein nachfolgend beschriebenes Rohrschott, aber auch für andere Zwecke geeignet ist. Die Quellmittelzusammensetzung enthält mindestens ein wärmewirksames, bei hohen Temperaturen beständiges Quellmittel, insbesondere Blähgraphit, ggf. in Kombination mit mindestens einem bei niederer Temperatur ansprechenden Quellmittel, sowie eine Bindemittelmischung aus wärmewirksamen Bindemitteln, die bei unterschiedlichen Temperaturen ansprechen.

Ein Rohrschott dient zum Schutz von Rohrdurchführungen durch Wände oder Decken im Brandfalle. Es hat einen zum Umfassen eines im Bereich der Wand oder Decke liegenden Rohrabschnittes ausgebildeten Mantel, zwischen dem und dem Rohr ein wärmewirksames Quellmittel zum Ausfüllen des Rohrabschnittes vorgesehen ist.

Bei dem Rohr handelt es sich in der Regel um ein Rohr aus Kunststoff, insbesondere PVC, PE und PP. Solche Rohre haben in der Regel einen kreisrunden Querschnitt. Die Rohraußendurchmesser können nach verschiedenen Größen abgestuft sein und liegen in der Regel bei Durchmessergrößen von 32, 50, 70, 110, 132, 160, 200, 250, 315 und 400 mm. Die Rohre können jedoch auch eine von der kreisrunden Form abweichende Querschnittsform besitzen, beispielsweise rechteckig sein. Bei den Rohren handelt es sich vorzugsweise um solche, die zur Leitung von Fluiden bestimmt sind, wie Lüftungsrohre und Abwasserrohre. In der Regel sind in den Rohren keine Leitungen verlegt. Zur weiteren Erläuterung des Aufbaus und der Wirkungsweise eines Rohrschotts wird auf die WO 91/0 40 74 verwiesen, deren Inhalt ausdrücklich zum Offenbarungsgehalt dieser Anmeldung gemacht wird. Ein Beispiel für ein Rohrschott mit einer Quellmittelzusammensetzung ist außerdem in der GB-A-2 111 624 beschrieben.

Die Quellmittelzusammensetzung gemäß der Erfindung enthält 5 bis 40 Gew.-%, insbesondere 20 bis 30 Gew.-% mindestens eines bei höheren Temperaturen ansprechenden Quellmittels, 0 bis 30 Gew.-%, insbesondere 10 bis 20 Gew.-% mindestens eines bei niedrigeren Temperaturen ansprechenden Quellmittels, 30 bis 90 Gew.-%, insbesondere 50 bis 70 Gew.-% einer bei abgestuften Temperaturen ansprechenden Bindemittelmischung und 0 bis 2 Gew.-% eines hydrophobierenden Zusatzes, insbesondere hydrophobe Kieselsäure.

Das bei hoher Temperatur beständige Quellmittel kann an Stelle von Blähgraphit oder zusätzlich noch Vermiculit und/oder Perlit enthalten. Blähgraphit ist als einziger Bestandteil jedoch bevorzugt. Das bei niedriger Temperatur ansprechende Quellmittel dient Vorzugsweise dazu, schon bei Schwelbränden, die in der Regel bei mäßig hohen Temperaturen ablaufen, ein Aufblähen der Quellmittelmischung zu erreichen, wenn dies erwünscht ist. Eine geeignete, bei niedriger Temperatur ansprechende Quellmittelmischung kann in an sich bekannter Weise Phosphate, organische Stickstoff-Verbindungen und Kohlenhydrate enthalten.

Die Bindemittelmischung enthält mindestens zwei, vorzugsweise mindestens drei bei verschiedenen Temperaturstufen wärmewirksam werdende Bindemittel. Liegt das Quellmittel in Pulver oder Granulatform vor, dann enthält es vorzugsweise ein Bindemittel, das bereits bei Temperaturen ab 70 bis 120 °C, insbesondere bei ca. 100 °C wirksam wird. Ein solches Bindemittel dient zur Aufhebung der Rieselfähigkeit des Pulvers oder Granulates. Es kann aber auch in in stückiger Form oder in Form von vorgeformten Formkörpern vorliegenden Quellmittelzusammensetzungen enthalten sein. Geeignete "Niedertemperatur-Bindemittel" sind thermoplatische Polymere, insbesondere Polyvinylacetat.

Die Bindemittelmischung enthält weiterhin vorzugsweise bei mittleren Temperaturen insbesondere im Bereich von ca. 300 bis 500 °C, vorzugsweise ca. 400 °C wirksam werdende anorganische Bindemittel. Als solche Bindemittel eignen sich anorganische Schmelzkleber, insbesondere Borate.

Bei hoher Temperatur wärmewirksame Bindemittel entfalten ihre Bindemittelwirkung vorzugsweise ab ca. 700 bis 800 °C. Solche Bindemittel sind Gläser und bei diesen Temperaturen ansprechende Sintermaterialien. Besonders geeignet ist feinteiliges Glas mit einer Teilchengröße von ca. 100 bis 200 µm. Die anorganischen Bindemittel dienen vorzugsweise dazu, die Teilchen des Blähmittels aneinanderzubinden und um ein Auseinanderfallen und Pulverigwerden des aufgequollenen Quellmittels zu verhindern. Vorzugsweise bestehen mindestens 30 Gew.-% der Bindemittelmischung aus bei niederer Temperatur ansprechenden Bindemittel. Das bei hoher Temperatur ansprechende Bindemittel ist vorzugsweise in der doppelten bis dreifachen Menge vorhanden wie das bei mittlerer Temperatur ansprechende Bindemittel. Eine geeignete Bindemittelmischung enthält ca. 20 bis 60 Gew.-% organisches Bindemittel, 5 bis 25 Gew.-% bei mittlerer Temperatur ansprechender Schmelzkleber und ca. 35 bis 55 Gew.-% bei hoher Temperatur ansprechender Schmelzkleber, insbesondere Glas.

Es sind verschiedene Quellmittel bekannt, insbesondere in Folie-, Pasten-und Pulverform. Bei der Erfindung bevorzugt ist ein Quellmittel, das in trockener, vorzugsweise stückiger Form vorliegt. Mit besonderem Vorteil liegt das Quellmittel in Form von mindestens einem vorgeformten Körper vor, der vorzugsweise der Außenform des Rohres, insbesondere der Form des Zwischenraumes zwischen Rohr und Gehäuse angepaßt ist und als vorgeformter Körper einsetzbar ist. So kann das Quellmittel die Form eines im wesentlichen zylindrischen, formstabilen Rohr- oder Rinnenkörpers aufweisen, dessen Innenkrümmung gleich oder geringfügig größer ist wie die Außenkrümmung des Rohres. Weiterhin kann der Rohrkörper mit Vorteil in mindestens zwei rinnenförmig verlaufende Abschnitte unterteilt sein, die zu einem Rohrmantel ergänzend zusammenfügbar sind. Bei einer zweiteiligen Ausführung des Gehäuses besitzt der Quellmittelkörper vorzugsweise die Form von zwei Halbrohren. Das Quellmittel kann durch Pressen und insbesondere durch extrudieren zu den entsprechenden Formkörpern verdichtet sein, deren Dichte über 1 g/cm³ liegt. Dadurch können große Quellmittelmengen auf verhältnismäßig kleinem Raum untergebracht werden. Die radiale Ausdehnung des Raumes zwischen Rohr und Gehäuse und damit die Stärke der Quellmittelschicht liegt, je nach Rohraußendurchmesser und Asymmetrie des Raumes, normalerweise zwischen 10 und 40 mm.

Bei einer anderen Ausführungsform der Erfindung besitzt das Quellmittel die Form eines rieselfähigen körnigen Granulats, dessen durchschnittliche Korngröße vorzugsweise im Bereich von 0,1 bis 5 mm liegt. Jedes Korn hat auch dann, wenn das Quellmittel eine Quellmittelmischung ist, vorzugsweise dieselbe stoffliche Zusammensetzung.

Das Quellmittel bzw. die Quellmittelmischung liegt vorzugsweise, wie oben beschrieben, in stückiger Form vor. Dabei kann das Granulat beispielsweise durch Aufbaugranulierung oder durch Zerkleinern größerer Stücke gewonnen werden. Vorgeformte Formkörper können durch Pressen oder durch plastische Verformung mit anschließender Verfestigung hergestellt werden, wobei die bei niederer Temperatur ansprechenden Bindemittel schon ihre Wirkung entfalten können. Formkörper und Granulat können dieselbe Zusammensetzung besitzen. So kann Granulatmaterial aus bei der Herstellung der Formkörper anfallenden Abfallmaterialien hergestellt werden.

Die Zusammensetzung und die Herstellung des Quellmittels bzw. der Quellmittel-Formkörper wird anhand der nachfolgenden Beschreibung und bevorzugten Beispielen erläutert. Dabei wird als Quellmaterial Blähgraphit verwendet, wie er beispielsweise in der DE-A 28 41 907, der DE-B 24 21 332 und der US-PS 35 74 644 beschrieben ist.

### Beispiel 1

Durch trockenes Vermischen wird eine Mischung aus 26 Gew.-% blähfähigem Graphit, 25 Gew.-% Glaskügelchen mit einer mittleren Teilchengröße von 100 µm, 10 Gew.-% Zinkborat, 14 Gew.-% einer Mischung aus Ammoniumpolyphosphat, Melamin und Pentaerythrit sowie 15 Gew.-% pulverförmigem Polyvinylacetat hergestellt. Der Mischung werden 10 Gew.-% der Komponenten zur Bildung von Epoxyharz beigegeben, wonach die Mischung unter Erwärmen zu Formkörpern geformt und unter Verfestigung des Epoxyharzes erhärtet wird. Das Formen der Quellmittel-Formkörper erfolgt durch Einpressen der Mischung in geeignete Formen.

### Beispiel 2

25 Gew.-% Polyvinylacetat in Form eines feinen Granulats, 35 Gew.-% blähfähiger Graphit, 30 Gew.-% Glaspulver mit einem Schmelzbeginn von 700 °C sowie 9,5 Gew.-% Borax und 0,5 Gew.-% hydrophobe Kieselsäure werden unter Erwärmen miteinander vermischt, wobei der Thermoplast erweicht und eine Bindung der Mischung herbeiführt. Nach Erkalten wird der erhaltene Kuchen granuliert.

### Beispiel 3

Beispiel 2 wird wiederholt, wobei das Vermischen in einem Extruder vorgenommen wird und die erwärmte Masse zu Pellets geeigneter Größe geformt wird.

## Patentansprüche

1. Quellmittelzusammensetzung, das insbesondere zur Verwendung in einem Rohrschott geeignet ist, dadurch gekennzeichnet, daß sie 5 bis 40 Gew.-%, insbesondere 20 bis 30 Gew.-% mindestens eines bei hohen Temperaturen ansprechenden Quellmittels, 0 bis 30 Gew.-%, insbesondere 10 bis 20 Gew.-% mindestens eines bei niederen Temperaturen ansprechenden Quellmittels, 30 bis 90 Gew.-%, insbesondere 50 bis 70 Gew.-% einer bei abgestuften Temperaturen ansprechenden Bindemittelmischung und 0 bis 2 Gew.-% eines hydrophobierenden Zusatzes enthält.

2. Quellmittelzusammensetzung nach Anspruch 1, dadurch gekennzeichnet, daß das bei hohen Temperaturen ansprechende Quellmittel blähfähiger Graphit ist.

3. Quellmittelzusammensetzung nach Anspruch 1 oder 2, dadurch gekennzeichnet, daß das bei niederen Temperaturen ansprechende Quellmittel eine Mischung aus Phosphaten, organischen Stickstoff-Verbindungen und Kohlenhydraten ist.

4. Quellmittelzusammensetzung nach einem der Ansprüche 1 bis 3, dadurch gekennzeichnet, daß die Bindemittelmischung ein bei Temperaturen zwischen 300 und 500 °C, insbesondere bei ca. 400 °C, wärmewirksam werdendes anorganisches Bindemittel, ein bei Temperaturen zwischen 600 und 800 °C, insbesondere bei ca. 700 °C wirksam werdendes anorganisches Bindemittel und vorzugsweise mindestens ein bei Temperaturen von 70 bis 120 °C, insbesondere ca. 100 °C wärmewirksam werdendes organisches Bindemittel enthält.

5. Quellmittelzusammensetzung nach Anspruch 4, dadurch gekennzeichnet, daß das organische Bindemittel ein Thermoplast und/oder Duroplast ist.

6. Quellmittelzusammensetzung nach Anspruch 4, dadurch gekennzeichnet, daß das bei Temperaturen von 300 bis 500 °C wirksam werdende anorganische Bindemittel ein anorganischer Schmelzkleber, insbesondere ein Borat, ist.

7. Quellmittelzusammensetzung nach einem der Ansprüche 4 bis 6, dadurch gekennzeichnet, daß das bei Temperaturen von 600 bis 800 °C wirksam werdende anorganische Bindemittel Glas, insbesondere in feinteiliger Form, ist.

## Claims

1. A swelling agent composition which is particularly suitable for use in a pipe seal, characterized in that it contains 5 to 40% by weight and more particularly 20 to 30% by weight of at least one swelling agent activated at high temperatures, 0 to 30% by weight and more particularly 10 to 20% by weight of at least one swelling agent activated at relatively low temperatures, 30 to 90% by weight and more particularly 50 to 70% by weight of a binder mixture activated at graduated temperatures and 0 to 2% by weight of a hydrophobicizing additive.

2. A swelling agent composition as claimed in claim 1, characterized in that the swelling agent activated at high temperatures is expandable graphite.

3. A swelling agent composition as claimed in claim 1 or 2, characterized in that the swelling agent activated at relatively low temperatures is a mixture of phosphates, organic nitrogen compounds and carbohydrates.

4. A swelling agent composition as claimed in any of claims 1 to 3, characterized in that the binder mixtures contains an inorganic binder heat-activated at temperatures of 300 to 500°C, more particularly at around 400°C, an inorganic binder activated at temperatures of 600 to 800°C, more particularly at around 700°C and preferably at least one organic binder heat-activated at temperatures of 70 to 120°C, more particularly at around 100°C.

5. A swelling agent composition as claimed in claim 4, characterized in that the organic binder is a thermoplastic and/or thermoset.

6. A swelling agent composition as claimed in claim 4, characterized in that the inorganic binder activated at temperatures of 300 to 500°C is an inorganic hotmelt adhesive, more particularly a borate.

7. A swelling agent composition as claimed in any of claims 4 to 6, characterized in that the inorganic binder activated at temperatures of 600 to 800°C is glass, more particularly in particulate form.

## Revendications

1. Composition d'agents gonflants qui convient en particulier pour l'utilisation dans une traversée de cloison pour tuyaux,
caractérisée en ce qu'
elle renferme de 5 à 40 % en poids, on particulier de 20 à 30 % en poids au moins d'un agent gonflant sensible aux températures élevées, de 0 à 30 % en poids, en particulier de 10 à 20 % en poids, d'au moins un agent gonflant sensible aux basses températures, de 30 à 90 % en poids, en particulier de 50 à 70 % en poids d'un mélange d'agents liants sensible aux températures échelonnées et de 0 à 2 % en poids d'un additif qui rend hydrophobe.

2. Composition d'agents gonflants selon la revendication 1,
caractérisée en ce que
l'agent gonflant sensible aux températures élevées est du graphite apte à l'expansion.

3. Composition d'agents gonflants selon la revendication 1 ou la revendication 2,
caractérisée en ce que
l'agent gonflant sensible aux basses températures est un mélange de phosphates, de composés azotés organiques et d'hydrates de carbone.

4. Composition d'agents gonflants selon l'une des revendications 1 à 3,
caractérisée en ce que
le mélange d'agents liants renferme un agent liant minéral qui devient réactif à la chaleur à des températures comprises entre 300 et 500°C, en particulier à environ 400°C ; un agent liant minéral qui devient réactif à des températures comprises entre 600 et 800°C, en particulier à environ 700°C et, de préférence au moins un agent liant organique qui devient réactif à la chaleur, à des températures allant de 70 à 120°C, en particulier à environ 100°C.

5. Composition d'agents gonflants selon la revendication 4,
caractérisée en ce que
l'agent liant organique est un thermoplaste et/ou un duroplaste.

6. Composition d'agents gonflants selon la revendication 4,
caractérisée en ce que
l'agent liant minéral qui devient réactif à des températures allant de 300 à 500°C est une colle par fusion, minérale, en particulier un borate.

7. Composition d'agents gonflants selon l'une des revendications 4 à 6,
caractérisée en ce que
l'agent liant minéral qui devient réactif à des températures allant de 600 à 800°C, est du verre en particulier sous forme finement divisée.
